# EUROPEAN PATENT SPECIFICATION

(11) **EP 1 435 780 B1**
(45) Date of publication and mention of the grant of the patent: **17.12.2008**
(21) Application number: 02766318.6
(22) Date of filing: 04.10.2002
(51) Int. Cl.: A01N 43/22, A01K 1/015

(54) **METHOD FOR CONTROLLING BEETLES**
VERFAHREN ZUR BEKÄMPFUNG VON KÄFERN
PROCEDE DE LUTTE CONTRE LES COLEOPTERES

(30) Priority: 08.10.2001 US 327645 P
(43) Date of publication of application: 14.07.2004
(73) Proprietor: ELI LILLY AND COMPANY, Indianapolis IN 46285 (US)
(72) Inventor: SNYDER, Daniel, Earl, Indianapolis, IN 46229 (US)
(74) Representative: Kent, Lindsey Ruth
(86) International application number: PCT/US2002/029838
(87) International publication number: WO 2003/030644

(56) References cited:
- EP-A- 0 475 656
- WO-A-98/03070
- WO-A-99/60856
- US-A- 5 571 901

## Description

This invention relates to a method for controlling a beetle infestation. More specifically, this invention provides a method for controlling a darkling, hide, or related beetle species in a poultry facility, comprising delivering to a locus of infestation or locus to be protected, an effective beetle controlling amount of a spinosyn.

The spinosyns (also known as A83543 factors) are agricultural insecticides that have shown activity against southern armyworm and other insects of the order Lepidoptera and cotton aphid and other members of the order *Homoptera*. (See, for example, U.S. Patent No. 5,571,901).

The spinosyns were also reported to have some ectoparasiticidal activity, i.e., in vitro activity against mosquito larvae, black blowfly larvae, and adult stable flies, which are members of the order *Diptera*, and transient systemic activity against larval blowfly and adult stable fly in guinea pigs and sheep (See U.S. Patent No. 5,571,901 Col. 26-32). Although it was suggested that the spinosyns would be active against a number of ectoparasites in a number of animals by a variety of routes, there have been no subsequent reported studies in avian species to support that suggestion.

U.S. 5,571,901 (Dow Elanco) is illustrative of a number of references. It discloses that the spinosyns, including spinosyns A and D (called A83543A and A83543D in the patent), have ectoparasiticidal activity. It suggests the spinosyns would be active against a number of ectoparasites in the order *Diptera* and included a lengthy list of ectoparasites which could be susceptible to spinosyns, including chicken flea, chicken mite and fowl tick (see column 31, lines 33-35). U.S. 5,571,901 also suggests that the spinosyns could be administered to poultry (column 31, lines 48-50) through animal feeds (Column 32, lines 28-36) and feed premixes (Column 40, Example 13). There is no teaching or suggestion of controlling Coleoptera in poultry facilities.

Spinosad Technical Bulletin, Dow AgroSciences LLC discusses the biological activity of spinosad (a product containing both spinosyns A & D, as discussed *infra*). This reference states that spinosad has biological activity against the Colorado potato beetle (*Leptinotarsa decemlineata*). Although this beetle is also in the order *Coleoptera*, it is an agricultural pest endemic to growing crops and not poultry facilities.

Poultry operations, i.e. operations that raise chickens, turkeys, ducks or other avian species as a source of eggs or meat, or for breeding stock, provide food for human consumption and are a significant economic industry worldwide. It is vital that birds reared in poultry operations are grown under substantially optimal conditions and that they are disease-free when they reach the consumer. One problem is that poultry operations are usually high-density, confined housing systems. Such conditions favor the development of various pests, such as beetles, which accumulate in associated litter, manure and building substrates used to house the birds. Because maintaining the health of the birds in commercial poultry operations is important and has economic consequences, the search for better methods for controlling pest infestations in poultry facilities continues.

In the present text, animal litter is taken in the broad sense, that is to say that this term comprises beds made of plant or other material in poultry facilities on which the animals lie or gather, including open-air sites or places, in particular those of the "feed lot" type in North America.

Two species of beetles that are major pests in poultry facilities are the darkling beetle, also known as the lesser mealworm, *Alphitobius diaperinus*, and the hide beetle, *Dermestes maculatus*. It has been estimated that the darkling beetle alone costs poultry operations tens of millions of dollars per year. These beetles are found throughout poultry facilities due to the ideal habitat such facilities provide, that is, an abundance of nutrition from scattered feed, moisture from the drinking water, and favorable temperatures. The darkling and hide beetles particularly and related beetle species propagate and grow within the confines of poultry facilities.

A principal problem these beetles cause is the structural damage they inflict on the buildings in the poultry facility. Darkling and hide beetle larvae migrate from the litter or manure at the floor of the poultry facility to crevices in the walls as they enter the pupation stage. The larvae climb walls or posts and then tunnel into the wood of the walls. This tunneling action causes structural damage to the wood support in the poultry facility; once inside the wall, the larvae can even destroy the insulation. The larvae bore into various hard surfaces to pupate. They usually prefer softwoods, although they have been known to bore through lead and tin surfaces. They also burrow through polystyrene, polyurethane, and even fiberglass insulation. This burrowing into the insulation results in a loss of heating efficiency within the facility, leading to greater costs to the poultry operator because poultry are sensitive to temperature. In addition, insulation must be repaired or replaced frequently, adding further costs.

Darkling beetles are also found in poultry feed. Consequently, when the birds are feeding, they will often eat the beetles rather than their feed. Consumption of beetles rather than the nutritionally-balanced feed is undesirable for poultry operations in that the chickens, turkeys or ducks do not gain the weight they should. As a result, the birds are not as commercially valuable. Beetles are also attracted to moist environments and often can be found near the poultry drinking water.

Darkling beetles are known to serve as a reservoir for many poultry disease pathogens, including *Salmonella*, tapeworm, numerous pathogenic *Escherichia coli* serotypes, fowl pox, and avian leukosis (Marek's disease). Consequently, the birds that feed on beetles have an increased mortality rate.

Migration of beetles from poultry facilities to neighboring residences and businesses can be a significant problem. At cleanout time, manure and litter accumulated in the poultry facility is spread over nearby fields. When the manure and litter contain beetles, the beetles will migrate to nearby farms or residences. Neighbors to poultry operations are not receptive to the general nuisance, health problems, and eradication costs associated with these pests. Thus, poultry operations with darkling or hide beetle infestations are likely to be reported to local regulatory agencies, the result of which may be monetary fines or imposition of costly corrective remedies.

The use of insecticides to control beetle infestations is hindered by the difficulty in locating the source of the beetle infestation. Since the beetle infestation is often present in crevices and cracks underneath floorboards and within walls, complete eradication is difficult.

Currently, there are several approaches for controlling beetles in poultry facilities. The predominant approach is thorough cleaning of the facility after removal of the flock, and then leaving the facility empty and unheated for a prolonged period of time. Various insecticides can then be applied to the litter, walls, support posts, and braces of the cleaned facility. Examples of insecticides that are currently used in attempts to control darkling and hide beetles include cyfluthrin, carbaryl, permethrin, boric acid, dichlorvos, and tetrachlorvinphos.

Another control approach involves the application of paint or varnish to the walls, posts, and floor of the poultry facility. The primary goal of the use of paint or varnish is to provide a slippery surface to prevent migration of beetles from the litter or feed to the walls of the poultry facility.

Although these methods can be effective, there are problems associated with them. For example, extensive or improper use of these insecticides can leave harmful residues in and around the facility which is transferred to the poultry through various means causing harmful residues in poultry meat and eggs. The paint or varnish approach is of limited effectiveness. There is, therefore, a need for an improved method for controlling beetle infestations in poultry facilities.

The present invention meets this need by providing a method for controlling a darkling, hide or related beetle species in a poultry facility comprising delivering to a locus of infestation or locus to be protected, an effective beetle controlling amount of a spinosyn. This method is believed safer, cost-effective, and longer-lasting than currently available treatments.

The present invention provides a method for controlling a darkling, hide or related beetle species in a poultry facility, comprising delivering to a locus of infestation or locus to be protected an effective beetle controlling amount of a spinosyn. The present invention arose from the discovery that the spinosyns are effective as ectoparasiticides against darkling and hide beetles, which are major pests in poultry facilities. Moreover, the spinosyns, especially spinosad, are effective against all the life cycle stages, i.e., larval, adults, pupae, of the beetle.

The method of this invention is especially advantageous due to the use of a spinosyn. The spinosyns are naturally derived fermentation products; spinosyn factors A and D have excellent human and animal safety profiles In contrast, currently used synthetic organically derived compounds, such as synthetic pyrethroids or permethrins, organophosphates, organochlorines, and carbamates, do not offer this safety advantage. For example, some of the currently used products such as pyrethroids are very toxic to avian species and can be lethal. The improved human safety profile of spinosyns is also an advantage for persons carrying out these methods.

Spinosyns are naturally derived fermentation products. They are macrolides produced by the cultivation of *Saccharopolyspora spinosa*. The fermentation produces many factors, including spinosyn A and spinosyn D (also called A83543A and A83543D). Spinosyn A and spinosyn D are the two spinosyns that are most active as insecticides. An agricultural product for crop protection comprised mainly of these two spinosyn factors, representing a new class called Naturalytes, is available commercially from Dow AgroSciences. The name "spinosad" is a generic name for a product containing primarily about 90% spinosyn factors A and D. Factor A is the major component, accounting for about 65-85% of spinosad.

Boeck et al. described spinosyns A-H and J (which they called A83543 factors A, B, C, D, E, F, G, H, and J), and salts thereof, in U.S. Patent Nos. 5,362,634 (issued Nov. 8, 1994); 5,496,932 (issued March 5, 1996); and 5,571,901 (issued Nov. 5, 1996). Mynderse et al. described spinosyns L-N (which they called A83543 factors L, M, and N), their N-demethyl derivatives, and salts thereof, in U.S. Patent No. 5,202,242 (issued Apr. 13, 1993); and Turner et al. described spinosyns Q-T (which they called A83543 factors Q, R, S, and T), their N-demethyl derivatives, and salts thereof, in U.S. Patent Nos. 5,591,606 (issued January 7, 1997) and 5,631,155 (issued May 29, 1997), and 5,767,253 (issued June 16, 1998). Spinosyns K, O, P, U, V, W, and Y are described, for example by Carl V. DeAmicis, James E. Dripps, Chris J. Hatton and Laura I. Karr in American Chemical Society's Symposium Series: Photochemicals for Pest Control, Chapter 11, "Physical and Biological Properties of Spinosyns: Novel Macrolide Pest-Control Agents from Fermentation", pages 146-154 (1997).

Each spinosyn factor has a 12-membered macrocyclic ring that is part of an unusual tetracyclic ring system to which two different sugars are attached, the amino-sugar forosamine and the neutral sugar 2N,3N,4N-(tri-O-methyl)rhamnose. This unique structure sets the spinosyns apart from other macrocyclic compounds. The various spinosyn factors are characterized by differences in the substitution patterns on the amino group of the forosamine, at selected sites on the tetracyclic ring system, and on the 2N,3N,4N-(tri-O-methyl)rhamnose group.

The spinosyn factors and derivatives can react to form salts that are also useful in the methods and formulations of this invention. The salts are prepared using standard procedures for salt preparation.

The term "spinosyn" as used herein refers to an individual spinosyn factor (spinosyn A, B, C, D, E, F, G, H, J, K, L, M, N, O, P, Q, R, S, T, U, V, W, or Y), an N-demethyl derivative of an individual spinosyn factor, a salt of a factor or derivative, or a combination thereof. Certain spinosyns, such as factors A and D are preferred spinosyns. Spinosad, which contains both factors A and D, is especially preferred. The spinosyn factors, their N-demethyl derivatives, and salts of the factors or derivatives are prepared using procedures known in the art.

The methods of this invention are useful for controlling a darkling, hide or related beetle species in a poultry facility. The terms "control" or "controlling" refer to preventing, reducing, or eliminating the presence of a darkling, hide or related beetle infestation.

The term "comestible" as used herein means edible; it may or may not be nutritional.

The term "related beetle species" refers to a beetle species that is similar in character to a darkling or hide beetle and is found in poultry facilities.

The term "poultry facility" includes a hatching, growing, or breeding house, and a pen or other confined area of habitation i.e., sites where chickens or turkeys are raised for meat, eggs, or for breeding stock.

The term "structural substrates" refers to a physical component of a poultry facility upon which a beetle infestation may be present, including support braces, walls, floorboards, and insulation.

Examples of a locus of infestation or locus to be protected, i.e., a site where beetles infest or may infest a poultry facility include the birds' houses, pens, cages, nests, their feed or water supply, and their litter and manure.

Poultry litter is basically composed of materials of plant origin, such as, for example, sawdust or wood chippings, with which dejecta or excrement from the animals will be mixed in time. If the litter is not changed at each rearing cycle, the thickness of the soiled litter may reach several tens of centimetres. In particular, beetles from the Tenebrionidae family, also known as darkling beetles, develop therein. The treatment of poultry litter is a problem which is particularly difficult to solve in that any product used to treat this litter has a tendency to be absorbed by the litter, either by the excrement which is found therein or by the plant matter which is found therein. Moreover, the continuous arrival of fresh excrement tends to isolate the insecticidal materials from the site to be treated.

In the methods of this invention, the spinosyn is delivered to the locus of infestation or locus to be protected in a poultry facility. Although the spinosyn is usually delivered to the site of infestation in a liquid spray formulation, it may be delivered in a variety of ways. For example, delivery may also be accomplished by dusting, applying a powder (dust or wettable powder), applying granules (solid or water dispersible) or other solid formulations or fogging or misting.

The pesticidal formulations or compositions comprise at least one active spinosyn, preferably spinosad, mixed with solid or liquid vehicles, surface-active agents, or both, these various constituents being acceptable in aviculture, in the veterinary field, or both, and, preferably, in the field of poultry rearing. In particular, conventional vehicles and conventional surface-active agents can be used.

The compositions used in the invention can either be compositions, generally diluted, which are ready to be applied to the site infested or capable of being infested by the parasite or can be concentrated compositions (better suited to commercial establishments or storage), which should be diluted before application. The dilute composition can be prepared either by diluting with water from a commercial concentrated composition containing the active material (the concentrated mixture being called "ready mix") or by means of the mixture prepared at the time of use (called "tank ' mix") of compositions separately comprising the various constituents or vehicles.

The compositions used in the invention can also contain various other ingredients such as, for example, protective colloids, adhesives, thickening agents, thixotropic agents, penetrating agents, stabilizing agents, sequestering agents and the like. More generally, these compositions can be combined with all the solid or liquid additives according to conventional formulating techniques.

Generally, the compositions for use in the methods of the invention usually contain from 0.001 to 95% by weight of spinosyn, preferably 0.5 to 90% by weight for the concentrated compositions. Except when otherwise indicated, the percentages recited herein are percentages by weight.

The term "vehicle" denotes a natural or synthetic, organic or inorganic material with which the active material(s) is combined to facilitate its application to the locus of infestation or locus to be protected. This vehicle is thus generally inert and it must be acceptable in aviculture, in the veterinary field, or both, and, preferably, in the field of poultry rearing. The vehicle can be solid (clays, natural or synthetic silicates, silica, resins, waxes, solid fertilizers and the like) or liquid (water, alcohols, and the like).

The surface-active agent can be an emulsifying, dispersing or wetting agent of ionic or nonionic type or a mixture of such surface-active agents. Such agents, for example, include salts of polyacrylic acids, salts of lignosulphonic acids, salts of phenolsulphonic or naphthalenesulphonic acids, polycondensates of ethylene oxide with fatty alcohols or with fatty acids or with fatty amines, substituted phenols (especially alkylphenols or arylphenols), salts of esters of sulphosuccinic acids, taurine derivatives (especially alkyltaurates), phosphoric esters of polyoxyethylenated phenols or alcohols, esters of fatty acids and of polyols, and the derivatives of the above compounds containing sulfate, sulfonate and phosphate functional groups. The presence of at least one surface-active agent is generally indispensable when the active material(s), the inert vehicle, or both, are not soluble in water and when the carrier agent for application is water. Preferrably at least one nonionic surfactant is employed having an HLB of between 7 and 16.

The surface-active agent content of the compositions for use in the methods of the invention is advantageously between 1% and 40%, preferably between 1% and 10%, and more preferably between 1% and 5%.

The pesticidal composition for use in the methods of the invention can be in fairly diverse, solid or liquid forms.

Wettable powders (or powder to be sprayed) generally contain 1 to 90% of active material(s), as well as, in addition to the solid vehicle, from 1 to 30% of a wetting agent, from 1 to 20% of a dispersing agent and, when required, from 0.05 to 10% of one or more stabilizing agents and other additives, such as penetrating agents, adhesives, anticlumping agents, dyes, and the like.

To obtain powders to be sprayed or wettable powders, the active materials are intimately mixed, in suitable mixers, with the additional substances and the mixture is milled in ball or hammer mills or other suitable grinders or by micronization. Powders to be sprayed are thereby obtained with advantageous wettability and suspensibility; they can be suspended in water at any desired concentration and these suspensions can be used very advantageously, in particular for application, for example, to litter.

Aqueous dispersions and emulsions, for example the compositions obtained by diluting a wettable powder with water may be used in the methods of the invention. Emulsions can be of the water-in-oil or oil-in-water type and they can have a thick consistency, like that of a "mayonnaise."

The compositions for use in the methods of the invention can be formulated in the form of granules, in particular of water-dispersible granules.

The granules can be obtained by extrusion, by compacting, by impregnation of a granulated vehicle or by granulation from a powder (the active material content in these granules being between 0.01 and 85% for the latter cases).

The water-dispersible granules, with a bulk density generally of between approximately 0.2 and 0.8 (preferably 0.3 to 0.6), have a particle size generally of between approximately 0.1 and 3 mm and preferably between 0.3 and 1.5 mm.

The active material content of these granules is generally between 0.01% and 90%, and preferably between 0.02% and 85%.

The remainder of the granule is essentially composed of a solid filler and, optionally, of surface-active adjuvants which confer water-dispersibility properties on the granule. These granules can be essentially of two distinct types according to whether the filler used is soluble or insoluble in water. The filler can be inorganic or organic, including urea, kaolin and bentonite. The granules advantageously comprise surface-active agents (in a proportion of 1 to 20% by weight of the granule), of which more than half consists of, for example, at least one dispersing agent, and the remainder consisting of wetting agents.

It is also possible to add other adjuvants such as antifoaming agents.

The granule for use in the methods of the invention can be prepared by mixing the necessary ingredients and then granulating according to several known techniques (granulator, fluid bed, atomizer, extrusion, and the like). The preparation generally finishes with a crushing followed by a sieving to the desired particle size. It is also possible to use granules obtained as above and then impregnated with a composition containing the active material(s).

These granules can be used alone or in solution or dispersion in water so as to obtain the required dose. They can also be used to prepare combinations with other active materials, the latter being in the form of wettable powders, or of aqueous suspensions or granules.

Liquid compositions, or those intended to constitute liquid compositions at the time of application include solutions, in particular water-soluble concentrates, emulsions, emulsifiable concentrates or suspension concentrates, which can be suspoemulsions (suspensions of a solid in a liquid emulsion).

The suspension concentrates, applied by spraying, are prepared so as to obtain a stable fluid product which does not settle out and they generally contain from 0.1 to 75% of active material(s), from 0.5 to 25% of surface-active agent, from 0.1 to 10% of thixotropic agents and from 0 to 10% of suitable additives, such as antifoaming agents, corrosion inhibitors, stabilizing agents, penetrating agents and adhesives and, as vehicle, water and/or an organic liquid in which the active material(s) is/are insoluble or nearly insoluble: certain organic solid materials or inorganic salts can be dissolved in the vehicle to aid in preventing sedimentation or as antigels for water.

These suspension concentrates used in the invention preferentially comprise 0.1 to 50% of spinosyn, 20 to 50% of water, 20 to 40% of vegetable oil and 1 to 20% of surface-active, stabilizing and/or dispersing agents, in particular salts and esters of ethoxylated polystyrylphenols and ethoxylated alkylphenols.

A particularly preferred composition is a suspension concentrate comprising, by weight:

| | |
|---|---|
| Spinosad | 1-50% |
| Surfactant (nonionic) | 1-5% |
| Dispersant (anionic) | 1-5% |
| Antifoam agent (silicone emulsion) | 0.5-2% |
| Stabilizer(s) (mixture of polysaccharide and colloidal magnesium aluminum silicate) | 0.5-2% |
| Preservative | 0.1-0.5% |
| Propylene glycol | 3-15% |
| Water | to 100% |

Another method for delivering the spinosyn to the locus is by way of a poultry feed ration comprising a spinosyn, preferably spinosad, and a poultry comestible carrier. When this poultry ration is orally administered to the poultry species, much of the spinosyn passes through the bird's system and is excreted in the feces, either as parent compound or active metabolites. As a result, the spinosyn is delivered to the environment (litter and excrement) in which the beetles live.

A poultry feed ration comprising spinosyn and a poultry comestible carrier may be used for controlling a darkling, hide or related beetle species. Such rations are typically prepared from premixes, therefore, a premix poultry feedstuff comprising a spinosyn and a poultry comestible carrier may be used for controlling a darkling, hide or related beetle species. Spinosad is a preferred spinosyn for such rations and premixes. Another aspect is a method for controlling a darkling, hide, or related beetle species in poultry litter or manure comprising administering to poultry a poultry feed ration comprising spinosyn and a poultry comestible carrier.

The ready to be applied formulation should contain an amount of spinosyn that is effective to control the beetles. This amount will vary, depending on a number of parameters, such as the spinosyn being used, the severity of the infestation, local conditions, the type of substrate being treated, etc. In general, an effective amount of spinosyn, preferably spinosad, in such a formulation is from about 100 to about 5000 ppm of spinosyn in the formulation, typically from about 250 to about 1000 ppm.

When the formulation is a liquid, another factor to consider is the volume of the formulation that is applied to the site, i.e., the greater the volume, the greater the dose of the active agent. It is recommended to apply a sufficient volume of the formulation to thoroughly wet the site being treated, especially if quantities of organic matter, such as feed or manure, are present. For example, when applying a formulation containing from 400 to 2000 ppm of spinosad, a volume of application would be from about 10 mL up to about 2 liters of diluted spray per square meter, with a typical volume of application being about 0.03 to 1.0 L of diluted spray per square meter.

Solid formulation types, in particular granules and dusts, that are applied to floors, litter or manure are applied at rates according to the amount of organic matter and the level of infestation but are generally applied between 0.5 and 50 grams of a spinosyn per 100 square meters of surface area, depending on the concentration of spinosyn in the formulation.

For oral administration, premix poultry feedstuff and poultry feed ration, spinosyn is preferably admixed with suitable carriers commonly employed in animal husbandry. Typical poultry comestible carriers include corn meal, soybean meal, alfalfa meal, rice hulls, soybean mill run, cottonseed oil meal, bone meal, ground corn, corncob meal, sodium chloride, urea, cane molasses and the like. Such carriers promote a uniform distribution of the active ingredient in the finished feed ration thereby ensuring proper distribution of the active ingredient throughout the feed. The poultry premix for use in the methods of the invention will contain about 1 to about 95 percent by weight of active ingredient, and more typically about 5 to about 50 percent by weight. The effective amount to be administered in the poultry feed ration will vary somewhat depending upon the particular poultry species being treated, but generally will be from about 1 to about 1000 parts per million (ppm) of total daily feed intake. Such amount will provide a dosage of about 1 to about 1000 mg/kg. A preferred embodiment employs about 10 to about 800 ppm, and more preferably from about 300 to about 600 ppm.

A further embodiment of the present invention is a ready-to-use litter or a litter with litter components comprising at least one spinosyn, preferably spinosad, associated with said litter at a dose of 1 to 2000 mg/kg of ready-to-use litter, preferably from 100 to 1000 mg/kg. The litter material can be sawdust, wood chips or other material commonly employed in avian husbandry, particularly poultry facilities. Any of the non-orally administered compositions noted above can be used to coat or be admixed with the litter material to afford a ready-to-use product.

The invention is further illustrated in the following examples.

The 25 g/L suspension concentrate (S.C.) used in Examples 1 and 3 was prepared from a commercially available 480 g/L spinosad suspension concentrate (Dow AgroSciences, 9330 Zionsville Road, Indianapolis, Indiana, USA 46268-1054) by combining 5.56% by weight of the commercially available spinosad suspension concentrate with 94.44% by weight of a composition containing:

| **Ingredient** | **Percent by weight** |
|---|---|
| Propylene glycol | 10.34 |
| Pluronic P-123 ^{™} | 8.80 |
| Emery 5366^{™} | 4.54 |
| Rhodopol 23^{™} | 0.20 |
| Veegum^{™} (granular) | 1.05 |
| Proxel GXL^{™} | 0.20 |
| Antifoam C^{™} | 0.21 |
| Distilled water | 74.66 |

The composition ingredients are combined and mixed to substantial uniformity, and when combined with the spinosod suspension concentrate are similarly blended to substantial uniformity.

The 480 g/L suspension concentrate (S.C.) used in Example 4 is commercially available and was obtained from Dow AgroSciences, 9330 Zionsville Road, Indianapolis, Indiana, USA 46268-1054.

### Example 1: Activity of Spinosad against the Darkling Beetle (Alphitobius diaperinus) in Poultry Litter.

This study involved 3 treatment groups and a control group. For each group, 2 replicate petri dishes containing 5-6 adult and larval stages of the darkling beetle and enough poultry litter to cover the bottom of each dish were used. Each dish was sprayed with an aqueous solution containing water only (control) or spinosad. The spinosad (a.i.) spray solutions were prepared from a 25 g/L suspension concentrate (SC) that was diluted into 473 mL of water to give concentrations of approximately 200, 400 or 800 ppm (3.8 mL, 7.6 ml, & 15.15 mL of the 25 g/L SC, respectively). In the control group only water was used.

The used poultry litter and beetles were obtained from a naturally infested broiler house. The surface of the litter was sprayed until wet, using a hand held misting sprayer. The petri dishes were maintained post-treatment at about 75°F (24°C) and 90% relative humidity in an incubator.

They were examined daily for 2 days post-treatment to determine the effect of spinosad on stages of the darkling beetle.

At all 3 concentrations (200, 400 and 800 ppm) tested, spinosad affected all of the beetles. The adult beetles were more severely affected and died more quickly, while the larval stages were alive but in an immobile catatonic state. The 200 ppm dose was less severe in its overall effects than the 400 and 800 ppm doses, which were similar in their effect on the beetle stages. The larval stages were clearly moribund. The control beetles appeared normal during this same time period post-treatment.

### Example 2: Activity of Spinosad Against Darkling Beetle

By using substantially the same procedures described above in Example 1, except as stated below, the in vitro insecticidal activity of an aqueous formulation of spinosad against larval and adult stages of darkling beetle is evaluated. The spinosad (a.i.) spray solution is made up from a 192 mg/mL active ingredient (a.i.) concentrate solution in N-methyl-2-pyrrolidinone that is diluted with distilled water to afford concentrations of 200, 500 or 1000 ppm (520 mL, 1300 mL or 2600 mL concentrate). The control solution is made by adding 260 mL of NMP to 500 mL of distilled water. The petri dishes are examined daily for three days post-treatment.

At all three concentrations, the beetles are affected substantially the same as described above in Example 1.

### Example 3: Effect of Spinosad on Darkling Beetle Population in a Broiler House.

The chicks in this trial were straight run day-old (Ross-Arbor) broiler chicks raised on previously used broiler litter. A suspension concentrate of spinosad was diluted in water to concentrations to be applied at 400 ppm and 800 ppm spinosad. The diluted solutions were applied to the litter as a spray at a rate of 1 gallon of diluted spray per 1000 square feet of surface area (40.1 mL per square meter). The control group was sprayed with water only. Chicks were placed in each pen for the beetle propagation phase. They were removed after 20 days. Then 30 new chicks were placed in each pen for the 7- week post-treatment production phase. All chicks were given the hatcheries' standard vaccinations.

There were 7 replicates each for the treatment groups and the control group. The groups were treated in the third week of the trial (when beetle numbers were sufficient for testing). The adult and larval stage beetles were counted at the time of treatment and each week after treatment for six weeks. The results are summarized in Table 1.

**Table 1: Percent reduction in adult and larval stages of darkling beetles in poultry litter after treatment with spinosad^{a}**

| **Amount of Spinosad (ppm)** | **Percent Reduction in Active Litter Beetles** | | | | | |
|---|---|---|---|---|---|---|
| | **Week(s) after Treatment** | | | | | |
| | **1** | **2** | **3** | **4** | **5** | **6** |
| **400** | 0 | 58.3 | 35 | 0 | 0 | 0 |
| **800** | 58 | 84.7 | 91.5 | 59 | 0 | 0 |

| | | | | | | |
|---|---|---|---|---|---|---|
| ^{a}Compared to control | | | | | | |

As Table 1 shows, when spinosad at 400 or 800 ppm was sprayed on active litter beetle populations in infested chicken bedding with growing chickens present, the beetle population was reduced for up to four weeks post treatment.

### Example 4: A Dose Study of the Efficacy of Spinosad

A field efficacy study was carried out to evaluate the efficacy of spinosad in a suspension concentrate (480 grams/liter, 44.2 percent by weight) administered as a premise and litter spray for the control of Darkling Beetle (Alphitobius diaperinus). The study was carried out according to the following schedule:

| **Days** | **Events** |
|---|---|
| Prior to Day minus 1 | Determine that an adequate population of beetles existed in the test pens of the facility. Tube traps were used to collect the population data and documented the mean baseline population of beetles in each pen. Random assignment of the Spinosad treatments and the positive control to pens within the poultry house. |
| Day minus 1 | All beetle evaluations were conducted. The test substances, positive and negative control materials were applied at the particular dose and application rate. The litter was then covered with approximately one inch of new shavings. The tube counting devices were then placed back into the pens. |
| Day 0 | Prior to placement of the birds, all beetle evaluation devices were collected and the insect evaluations were conducted to establish the level of control of the beetles. The birds were weighed and placed into each pen. |
| Day +1, +3, +7, +14, +21, +28, +35, +42 and +49 | All beetle evaluation data was collected for these days to evaluate the test substance(s) under study. |
| Day +49 | Birds weighed. Termination of the study. |

Spinosad (90% Factors A and D (ratio A/D: 87/13); Inert Ingredients: 10%) in a suspension concentrate (480 grams active ingredient per liter, 44.2%) was applied once on day minus 1, prior to population of the premises with animals. The suspension concentrate was diluted with water, mixed, and the appropriate concentration applied on day minus I of the live phase and prior to the population of the pens with day old chickens. The test substance was applied to the poultry litter using a 4-gallon Cooper Pegler NSI 16 sprayer. The sprayer was calibrated by timing (minutes/seconds) the period it took the sprayer to deliver one US gallon (3.785 L) of water. This procedure was repeated 5 times. A pen spraying sequence was then assigned to the pens and pens were sprayed in this order to minimize cross-contamination.

The volume of suspension applied to the litter was either 1 or 2 gallons/1000 ft² (40.1 mL or 81.5 mL per square meter) of the test substance. The sprayer's rate of delivery, as determined by the water spray test was approximately 3 minutes, 22 seconds. This rate of delivery was maintained during the spraying of all pens.

The poultry facility (litter only) was treated prior to the placement of birds so that no animals were exposed to the test substances. Ross X Ross Broilers were purchased from PECO Farms, Gordo, AL. One day old birds, 1,250 straight-run male and female birds, approximately 40 grams in weight, were placed into each of 10 pens on the day of hatch. A multi-pen poultry research house was used in this study. Each pen was treated with either the test substance Spinosad Suspension Concentrate Tempo (positive control), or water (negative control) at stated levels and application rates. This trial was conducted in a commercial poultry building, which had been converted to a floor pen facility containing ten 504 sq. ft. (46.8 square meter) pens. All pens had adequate and equivalent feeding and watering space per bird. The number of birds was adjusted to approximate a floor space of 4 ft² (0.37 square meters) per bird. New litter was added to a depth of 2 inches/pen. Previously used litter containing the beetles was placed on top of this new litter and remained there until broken up and top-dressed in preparation for the live phase of this project. Each pen contained a Ziggity Automatic Watering System containing 36 nipple waterers and one Roxell Automatic Feeding System containing 15 feeders. There was also a feed flat (22 inches x 15 inches; 55.88 cm x 38.1 cm) in each pen for presentation of feed to very young birds which remained until day 12. The birds received 24 hours of light per day for the first 18 days then 22 hours/day. The light source was a combination of natural daylight and three incandescent 60 watt bulbs per pen yielding 1 foot candle (10.764 Lumen per square meter) of light at bird level. Temperature and humidity in the house was monitored daily throughout the study via two Temperature/Humidity Recorders. Brooding equipment consisted of one 25,000 BTU (26375 Joules) propane fired brooder per pen.

Uncovered food and water sources/containers were not present during the spray application.

All poultry exposed to the litter and/or premises that were sprayed with the test substances were observed for 49 days after the placement of the animals in the facility. There were no adverse effects observed during the conduct of this study that were attributed to the active agents.

The study was initiated when a sufficient beetle population existed. The satisfactory baseline level of adults and larvae was determined as an average number per trap per 100 ft² (9.29 square meters).

The facility/pens to be treated were not treated with any other insecticide during the 30 days prior to treatment.

The birds were observed twice daily from the day of arrival until the study was completed looking for, by pen, signs of disease, mortality, and unusual circumstances. Amprolium at 0.0125% was used as an anticoccidial in the starter ration only. No other medications or growth promoters routinely employed in commercial rearing operations for broiler chickens were administered to the birds during this study. All birds were given their standard vaccinations.

No ancillary insecticide treatment other than the test substance was used during the conduct of the study.

The litter was pine wood shavings supplied from a local supplier. The methodology required a 30 day infestation period, and a 49 day live phase, during which time pens were sprayed with Spinosad Suspension Concentrate (diluted according to the protocol) on day minus 1 and populated with 125 day old broilers each on day 0. Tube trap counts (3 traps/pen) were used to verify satisfactory infestation levels prior to treatment. Traps were counted 16, 22 and 28 days after initiation of the infestation phase. The infestation was sufficient after 22 days and no other beetle placements were made subsequently. Once the beetle infestation was sufficient, the live phase of the project was initiated, day 0. Pens were assigned to negative control (water, 0 ppm), positive control (Tempo), 400 ppm, 600 ppm, 800 ppm and 1600 ppm of Spinosad.

During the infestation phase, when the litter containing the beetles was placed, an aliquot of fresh feed was placed along the side of each feeder line which simulated feed spillage by chickens and each pen was fogged to add moisture.

On day minus 2 of the live phase, the litter was broken up using rakes and the tube traps collected. On day minus 1 of the live phase, all pens were treated with the test substance and the positive control (Tempo), after which they were top dressed with 1 inch of new wood shavings (litter). Four tube traps were reset in each pen. On day 0 of the live phase, 125 previously weighed birds were added to each pen and the tube traps placed on day minus 1 removed, counted and replaced. All tube traps were also counted on day 3, 7, 14, 21, 28, 35, 42 and 49 during the conduct of the live phase of this study. On day 49, all birds were weighed and the live phase of this study completed.

There were four concentrations (400 ppm, 600 ppm, 800 ppm and 1600 ppm) of Spinosad applied to each of 8 pens at a rate of either 1 or 2 gallons per 1000 square feet (40.1 or 81.5 mL per square meter) per pen on day minus 1 of the live phase of this study. The calculated Rate of Application (ROA) was approximately 0.5 gal. or 1 gal./504 ft²/pen (1.89 L or 3,785 L/46.8 square meters per pen). One pen was a negative control pen and one pen was a positive control pen (Tempo Insecticide SC Ultra, Bayer Animal Health).

Tap water was the solvent used to dissolve the test substance(s). The litter was pine wood shavings obtained from a local supplier, Peacock Timber of Troy, Alabama.

The average number of beetles divided by 504 ft² (46.8 square meters) equaled 176.8 beetles/square foot/each pen (1904 beetles/square meter/each pen) at the start of the live phase.

The tube traps consisted of a 12 inch piece of PVC piping with a diameter of 1.5 inches (3.81 cm). The tube traps contained a 12 x 8 inch (30.48 x 20.32 cm) piece of brooder guard corrugated cardboard rolled into an 8 inch (20.32 cm) long tube and inserted into the PVC pipe. Beetles crawled into these tubes during the 7 day interval between counting and removal. The cardboard insert was removed and the beetles contained within them were counted and recorded. The first count was made on day 0 and the final count was made on day 49 during the live phase of this study.

The temperature, during the course of the study, ranged from a high of approximately 92° F to a low of approximately 50° F. The humidity, during the course of the study, ranged from a low of approximately 18% to a high of approximately 98%.

The animal scale was a TrueTest digital scale mounted on a wooden skid with wheels and set to weigh animals in kg. The mortality scale was a Sartorius digital scale used to weigh all birds that died in grams.

Murray Terrell, Cargill/Nutrena Feed Division, Montgomery, AL formulated starter ration was used in this trial. The formulations represent poultry diets used in this geographic area and the calculated analysis follows, as closely as possible, National Research Council recommendations for poultry, based on Nutrient Requirements of Poultry, 9^{th}. Revised Edition, 1994. All feed utilized in this trial was produced at the Cargill/Nutrena feed mill located in Montgomery, AL.

The birds were fed, during the live phase, a commercial type starter crumble ration from day 0 to day 28 of the study. On day 28 the birds were switched to a Finisher Ration supplied by Cargill/Nutrena Feed Division and remained on this ration until day 49 of the study. The birds were provided the appropriate feed (*ad libitum*) from the time they arrived at the research site until the trial was completed. Although the product directions called for Tempo to be administered at 8 mL/1000 ft² (8 mL/92.9 m²), the product was inadvertently formulated and administered at 16 mL/1000 ft² (16 mL/92.9 m²).

### Results

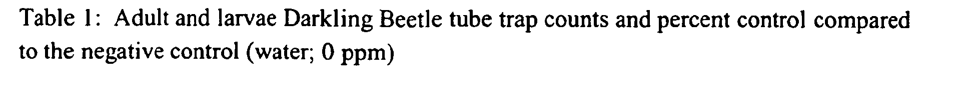

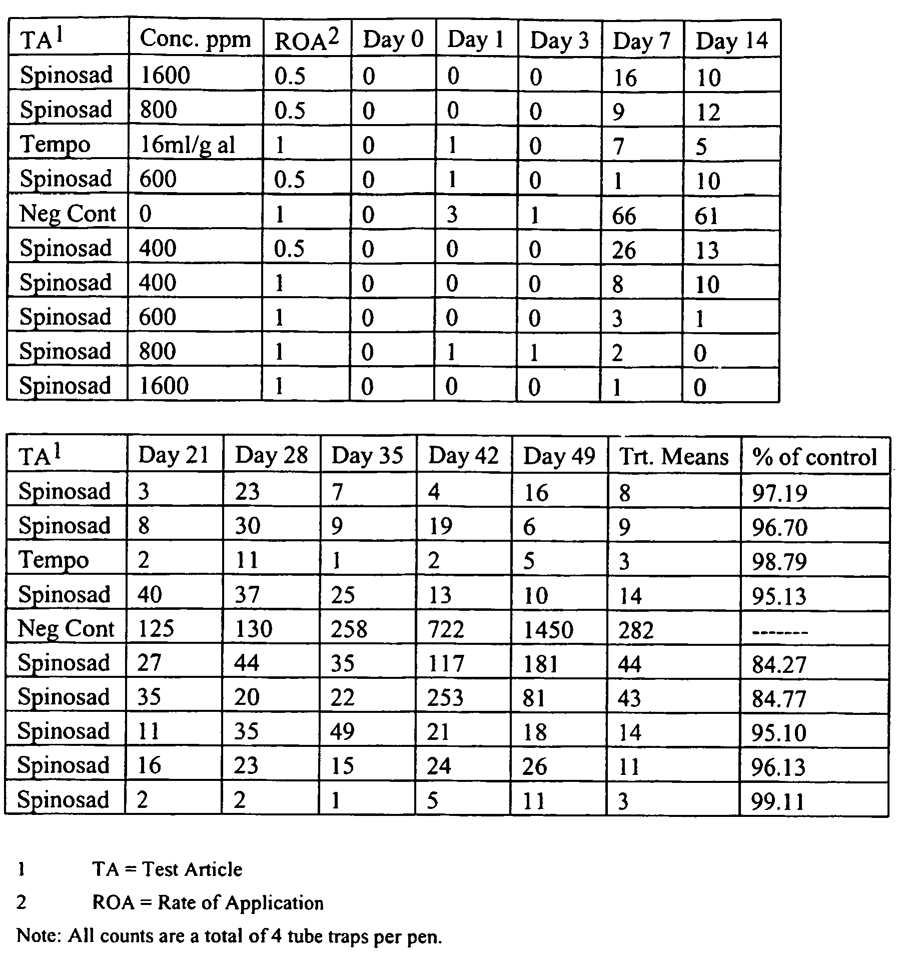

When compared to control (water only) the positive control (Tempo) presented 98.79% of control. Spinosad at 1600 ppm in one gallon (3.785 L) of water had the best performance level at 99.11% of control. There is a presumptive dose response within the Spinosad treatments in one gallon (3.785 L) of water. There is also a presumptive dose response within the Spinosad treatments mixed into 0.5 gallon (1.89 L) of water. In the presence of 176.8 beetles/ft² (1904 beetles/square meter average/pen) the Spinosad treatments had an average overall efficacy rate of 93.55% of control. The 400 ppm level of Spinosad in 0.5 or one gallon (1.89 or 3.785 L) of water seems to be the least efficacious of the Spinosad treatments and the 1600 ppm levels the best.

Spinosad Suspension Concentrate was effective at reducing darkling beetle infestations at levels at and above 400 ppm, applied at either 1 or 2 gal/1000 ft² (40.1 or 81.5 mL per square meter) up through 30 days of the last phase when compared to the positive control (Tempo). Spinosad Suspension Concentrate was effective at reducing darkling beetle infestations at levels above 400 ppm, applied at either 1 or 2 gal/1000 ft² (40.1 or 81.5 mL per square meter) up through 49 days of the last phase when compared to the positive control (Tempo). All spinosad treatments were effective in reducing darkling beetle infestations when compared to the negative control over the 49 day live phase period.

**Day 49 Tube Trap Data Summary**

| **(Total for Day 0 to Day 49)** | | | | |
|---|---|---|---|---|
| Treatment | Concentration | ROA | Beetle Count | % of Control |
| Spinosad | 1600 | 0.5 gal. | 79 | 97.19 |
| | | (1.89 L) | | |
| Spinosad | 800 | 0.5 gal. | 93 | 96.70 |
| | | (1.89 L) | | |
| Tempo | 16 ml/gal | 1 gal. | 34 | 98.79 |
| | | (3.785 L) | | |
| Spinosad | 600 | 0.5 gal. | 137 | 95.13 |
| | | (1.89 L) | | |
| Neg Cont | 0 | 1 gal. | 2816 | |
| | | (3.785 L) | | |
| Spinosad | 400 | 0.5 gal. | 443 | 84.27 |
| | | (1.89 L) | | |
| Spinosad | 400 | 1 gal. | 429 | 84.77 |
| | | (3.785 L) | | |
| Spinosad | 600 | 1 gal. | 138 | 95.10 |
| | | (3.785 L) | | |
| Spinosad | 800 | 1 gal. | 109 | 96.13 |
| | | (3.785 L) | | |
| Spinosad | 1600 | 1 gal. | 25 | 99.11 |
| | | (3.785 L) | | |

### Example 5: Beetle Control Premix Feedstuff for Chickens

A typical spinosyn-containing premixes for chickens is prepared using the ingredients and amounts shown in Table 2.

**Table 2: Premix Chicken Feedstuff**

| **Ingredient** | **Percent by Weight** |
|---|---|
| Spinosad | 25 |
| Ground Corn | 74 |
| Sodium Chloride | 1 |
| Total | 100 |

The above ingredients are blended to uniformity to provide a dry flowable premix that can be admixed with a typical animal feed ration at a rate to provide from about 10 ppm to about 1000 ppm of active ingredient in the final feed ration. For example, the premix can be added to the following chicken feed ration for convenient oral administration of the spinosad to chickens.

### Example 6: Beetle-Control Chicken Feed Ration

A beetle-controlling chicken feed ration is prepared by diluting a premix as described in Example 5. This premix is blended to uniformity and admixed with a typical poultry complete feed ration (typical feed ingredients are listed in Table 3) to provide a rate of spinosad effective to control beetles in the animals housing when it is excreted by the birds after ingestion.

### Example 7: Beetle-Control Chicken Feed Ration

A beetle-controlling chicken feed ration is prepared by mixing the ingredients shown in Table 3.

**Table 3: Beetle-Control Chicken Feed Ration**

| **Ingredients** | **Percent by Weight** | **lbs/ton** |
|---|---|---|
| Ground yellow corn | 65.9 | 1318 |
| Animal-vegetable fat | 1.53 | 30.6 |
| Corn Glut. meal (60%) | 4.0 | 80 |
| Soybean Meal (48%) | 19.19 | 383.8 |
| Fish meal - menhaden | 2.5 | 50 |
| Dicalcium phophate | 1.01 | 34.2 |
| Feather meal - Hydr. | 2.50 | 50 |
| Ground limestone | 0.83 | 16.6 |
| Salt | 0.30 | 6 |
| Vitamin Premix sup. 1 | 0.50 | 10 |
| Trace mineral premix sup. 2 | 0.10 | 2 |
| Methionine Hyd. Anal. | 0.15 | 3 |
| Lysine Hyd. Anal. | 0.29 | 5.8 |
| Spinosad | 0.5 | 10 |
| **TOTAL** | 100.00 | 2000 |

| | | |
|---|---|---|
| ¹Vitamin premix provides 3000 IU of vitamin A, 900 ICU of vitamin D₃, 40 mg. of vitamin E, 0.7 mg. of vitamin K, 1000 mg of choline, 70 mg. of naicin, 4 mg of pantothenic acid, 4 mg of riboflavin, 100 mcg of vitamin B12, 100 mcg of biotin and 125 mg of ethoxyquin per kg of complete feed. ² Trace mineral premix provides 75 mg of manganese, 50 mg of zinc, 25 mg of iron and 1 mg of iodine per kg of complete feed. | | |

## Claims

1. A method for controlling a darkling or hide beetle species comprising delivering in a poultry facility to a locus of infestation or locus to be protected, an effective beetle controlling amount of from 10 mL to 2.0 L per square meter of a spinosyn.

2. The method of claim 1 wherein the spinosyn is spinosad.

3. The method of claim 1 or claim 2 wherein the beetle is a darkling beetle.

4. The method of claim 1 or claim 2 wherein the beetle is a hide beetle.

5. The method of any one of claims 1 to 4 wherein the locus is a facility where chickens are raised.

6. The method of any one of claims 1 to 4 wherein the locus is a facility where turkeys are raised.

7. The method of claim 2 wherein from 30 mL to 1.0 L per square meter of spinosad is applied.

8. A method for controlling a darkling or hide beetle species in poultry litter comprising administering to poultry a poultry feed ration comprising 100 to 5000 ppm of a spinosyn and a poultry comestible carrier.

9. The method of claim 8 wherein the spinosyn is spinosad.

10. The method of claim 8 or claim 9 wherein the ration comprises from 250 to 1000 ppm of a spinosyn.

11. A poultry litter composition comprising poultry litter material and 1 to 2000 mg of at least one spinosyn per kg of litter material.

12. The composition of claim 11 wherein the spinosyn is spinosad.

## Patentansprüche

1. Verfahren zur Bekämpfung einer Schwarzkäferart oder Knochenkäferart durch Behandlung eines Orts eines Befalls oder eines zu schützenden Orts in einer Geflügelanlage mit einer zur Bekämpfung solcher Käfer wirksamen Menge von 10 ml bis 2,0 I/m² eines Spinosyns.

2. Verfahren nach Anspruch 1, worin das Spinosyn Spinosad ist.

3. Verfahren nach Anspruch 1 oder 2, worin der Käfer ein Schwarzkäfer ist.

4. Verfahren nach Anspruch 1 oder 2, worin der Käfer ein Knochenkäfer ist.

5. Verfahren nach einem der Ansprüche 1 bis 4, worin der Ort eine Anlage ist, wo Hühnchen aufgezogen werden.

6. Verfahren nach einem der Ansprüche 1 bis 4, worin der Ort eine Anlage ist, worin Truthähne aufgezogen werden.

7. Verfahren nach Anspruch 2, worin 30 ml bis 1,0 l/m² an Spinosad angewandt werden.

8. Verfahren zur Bekämpfung einer Schwarzkäferart oder Knochenkäferart in Geflügelstreumaterial durch Verabreichung einer Geflügelfutterration an Geflügel, die 100 bis 5000 ppm eines Spinosyns und einen Futtermittelträger für Geflügel enthält.

9. Verfahren nach Anspruch 8, worin das Spinosyn Spinosad ist.

10. Verfahren nach Anspruch 8 oder 9, worin die Geflügelfutterration 250 bis 1000 ppm eines Spinosyns enthält.

11. Geflügelstreuzusammensetzung, umfassend ein Geflügelstreumaterial und 1 bis 2000 mg wenigstens eines Spinosyns pro kg Streumaterial.

12. Zusammensetzung nach Anspruch 11, worin das Spinosyn Spinosad ist.

## Revendications

1. Procédé pour le contrôle d'une espèce de ténébrion ou de dermeste comprenant la fourniture, dans un établissement de volailles, en un endroit d'invasion ou un endroit à protéger, d'une quantité efficace pour le contrôle des coléoptères, en une quantité de 10 ml à 2,0 I par mètre carré, d'un spinosyn.

2. Procédé selon la revendication 1 où le spinosyn est le spinosad.

3. Procédé selon la revendication 1 ou la revendication 2, où le coléoptère est un ténébrion.

4. Procédé selon la revendication 1 ou la revendication 2, où le coléoptère est un dermeste.

5. Procédé selon l'une quelconque des revendications 1 à 4 où l'endroit est un établissement où des poulets sont élevés.

6. Procédé selon l'une quelconque des revendications 1 à 4 où l'endroit est un établissement où des dindes sont élevées.

7. Procédé selon la revendication 2, dans lequel on applique 30 ml à 1,0 par m² de spinosad.

8. Procédé pour le contrôle d'une espèce de ténébrion ou de dermeste dans une litière de volaille comprenant l'administration à la volaille d'une ration alimentaire pour volaille comprenant 100 à 5000 ppm d'un spinosyn et un support comestible pour volaille.

9. Procédé selon la revendication 8 où le spinosyn est le spinosad.

10. Procédé selon la revendication 8 ou la revendication 9, où la ration comprend 250 à 1000 ppm d'un spinosyn.

11. Composition de litière pour volaille comprenant un matériau pour litière pour volaille et 1 à 2000 mg d'au moins un spinosyn par kg de matériau pour litière.

12. Composition selon la revendication 11 où le spinosyn est le spinosad.
